# EUROPEAN PATENT APPLICATION

(11) **EP 4 667 088 A1**
(43) Date of publication of application: **24.12.2025**
(21) Application number: 24183134.6
(22) Date of filing: 19.06.2024
(51) Int. Cl.: B01D 53/62, C01B 32/50, C08K 3/26, B01D 53/22

(54) **METHOD AND SYSTEM FOR CARBON DIOXIDE REMOVAL**

(71) Applicant: Airzyme Sweden AB, 116 25 Stockholm (SE)
(72) Inventor: SERVATI, Mohsen, 116 25 Stockholm (SE); PURSHARIFI, Roshan, 116 25 Stockholm (SE)
(74) Representative: Metida

(57) **Abstract**

The present document is directed to a method and a system for carbon dioxide removal from a carbon dioxide containing gas. In the method and system of the present document carbon dioxide from a carbon dioxide gas is passed through two different porous media wherein in the first porous medium the carbon dioxide from the gas is converted into bicarbonate and wherein in the second porous medium the bicarbonate is converted into carbon dioxide.

## Description

### TECHNICAL FIELD

The present document is within the field of carbon dioxide removal from a carbon dioxide containing gas. In the method and system of the present document carbon dioxide from a carbon dioxide gas is passed through two different porous media wherein in the first porous medium the carbon dioxide from the gas is converted into bicarbonate and wherein in the second porous medium the bicarbonate is converted into carbon dioxide.

### BACKGROUND

Direct Air Capture (DAC) and Carbon Capture, Utilization, and Storage (CCUS) technologies are essential tools in combating against climate change. They are designed to capture and remove carbon dioxide (CO2) from both ambient air and industrial sources of emissions. This approach is critical to reducing atmospheric CO2 levels and achieving negative emissions, which are crucial steps towards meeting global climate goals and reversing the harmful effects of global warming.

Global temperature rise, severe weather events, and disruptions in natural ecosystems underscore the urgency to develop effective DAC and CCUS technologies. Together, DAC and CCUS offer a pathway to not only complementing emissions reduction efforts but also to address the stock of CO2 in the atmosphere and emissions at their source, scaling up to meet the ambitious goals of international climate agreements like the Paris Agreement.

Existing DAC and CCUS technologies primarily fall into two categories based on the CO2 capture mechanism: chemical absorption and physical adsorption. Chemical absorption involves the use of liquid solvents that selectively bind with CO2, allowing for its separation from other atmospheric and industrial flue gases. Once captured, the CO2 is released from the solvent through a regeneration process, allowing the solvent to be reused. On the other hand, physical adsorption utilises solid sorbents with surfaces that CO2 molecules adhere to physically. Like chemical absorption, the captured CO2 can be released through thermal or pressure changes, regenerating the sorbent for repeated use.

Despite the potential of state-of-the-art DAC and CCUS technologies, several significant challenges hinder their broader adoption:
1. High Energy Requirements: The processes, including chemical absorption and physical adsorption, demand substantial energy for CO₂ release and capture medium regeneration, leading to high operational costs.
2. Efficiency Challenges: In the context of DAC, the ambient air's low CO2 concentration, approximately 400 parts per million (ppm), necessitates the deployment of expansive air contactor systems. This requirement significantly escalates the capital expenditures involved in establishing DAC infrastructure. Similarly, in the realm of CCUS, the necessity to accommodate large absorber columns arises. These columns are essential to manage the industrial flue gases, which exhibit a wide range of CO2 concentrations. The substantial size of these absorber columns not only results in elevated capital costs but also introduces logistical challenges due to the spatial limitations inherent in many industrial environments. This dual aspect of efficiency challenges-spanning both DAC and CCUS technologies-underscores the pressing need for innovations that can minimize the physical footprint and financial outlay required for effective carbon capture.
3. Material Cost and Durability: The technologies are hampered by the cost and durability of their capturing materials. Chemical solvents pose risks due to their volatility, corrosive nature and potential toxicity, leading to environmental concerns and higher operational complexities. Physical sorbents face issues of fragility and elevated costs, with many materials degrading over time and losing efficiency.

To enhance efficiency and scalability for Carbon Capture Technologies, the field is increasingly inspired by nature, adopting biomimetic processes for improved capture methods.

The vertebrate respiratory system exemplifies an efficient mechanism for CO2 separation, employing a low-energy, continuous process that leverages rapid dissolution and regeneration capabilities. This system's effectiveness is partly due to the presence of carbonic anhydrase (CA) enzymes within red blood cells, which selectively dissolve CO2 from bodily tissues and regenerate it during exhalation. This regeneration process is significantly enhanced by the ultra-thin and highly permeable alveolar-capillary barrier, which facilitates the diffusion of gases with remarkable efficiency.

The CA enzymes play a crucial role by catalyzing the hydration of CO2 to form carbonic acid, which subsequently dissociates into bicarbonate ions and protons. This reaction is reversible and is modulated based on the concentrations of CO2 and bicarbonate ions, ensuring efficient capture and release of CO2. The elegance of this natural system lies in its ability to balance the capture and release of CO2 through a finely tuned biochemical process, achieving high efficiency with minimal energy expenditure.

Inspired by this, our approach aims to replicate these natural principles to create a highly efficient, low-energy carbon capture system applicable to both DAC and Carbon Capture, CCUS. By mimicking the CA enzymes' functionality and the alveolar-capillary interface's structural advantages, we propose a method that allows for the selective, rapid dissolution and regeneration of CO2 in a continuous process. This innovation addresses the high energy demands and operational costs associated with existing carbon capture methods, such as chemical absorption and physical adsorption.

### SUMMARY

The present document is directed to means and methods for carbon removal from carbon dioxide containing gases.

The technology of the present document leverages selective CO₂ catalysis and optimized material properties to mimic natural gas exchange efficiency, significantly reducing the energy footprint and lowering operational costs. This scalable, economically viable solution aligns with global climate change mitigation efforts, promising to exceed the ambitious goals of international climate agreements by offering an efficient tool for CO₂ capture and removal.

The present document is therefore directed to a method for carbon dioxide removal from a carbon dioxide containing gas, said method comprising the steps of:
i) contacting said carbon dioxide containing gas with a first porous medium, said first porous medium being hydrophilic and having a catalytic agent to catalyse the conversion of carbon dioxide into bicarbonate and hydrogen immobilized on its outer surface and inside its pores;
ii) allowing the bicarbonate to diffuse through the first porous medium whereby said catalytic agent catalyses the conversion of bicarbonate produced in step i) to carbon dioxide;
iii) allowing the carbon dioxide produced in step ii) to diffuse through a second porous medium, said second porous medium being hydrophobic,
wherein said first porous medium is wetted by a liquid, such as water, thus forming a liquid layer on said first porous medium and wherein said first porous medium and said second porous medium, respectively, have interconnected pores.

The catalytic agent may be a hydration and/or hydrolysis reaction rate promoter catalyst, a metal-organic framework (MOF), an aqueous amino acid and/or a salt formulation thereof, a solid Bis-iminoguanidine and/or an enzyme, such as carbonic anhydrase.

The first porous medium may comprise or consist of thermoplastic polymer(s), preferably hydrophilic thermoplastic polymer(s), such as polyamide, polyimide, polyacrylonitrile, and/or polysulfone.

The first porous medium may be in the form of a substantially flat surface or in the form of a spherical or cylindrical pellet, such as a pellet have a mean diameter of from about 0.2 mm to about 10 mm.

Such pellets may be placed in a column, preferably a column having a diameter being substantially the same diameter as the diameter of the pellet.

The liquid layer may have a thickness of from about 0.3 nm to about 1000 nm, such as from about 0.3 nm to about 50 nm, such as from about 3 nm to about 50 nm, such as about 3 nm.

The second porous medium is hydrophobic and may comprise or consist of polypropylene, polyethylene, polyester, PVDF or PTFE.

The present document is also directed to a method for producing a first porous medium for carbon dioxide removal on the surface of a second porous medium by plasma polymerisation of the surface of a second porous medium.

The present document is also directed to a method for simultaneously producing a first porous medium the form of a flat surface and a second porous medium for carbon dioxide removal, said method comprising the steps of:
i) track-etching a polymer material, such as a polyester or polycarbonate membrane, to provide a polymer material with etch damages, e.g. using a high-energy electron beam;
ii) developing pores from the etch damages on the polymer material of step i) by chemical etching in a basic solution, such as a NaOH solution;
iii) neutralizing the basic solution on the etched polymer material of step ii), e.g. with an acid such as e.g. acetic acid, to stop the etching;
iv) optionally rinsing neutralised polymer material of step iii), such as with distilled or deionized water;
v) drying the polymer material of step iii) or iv), such as by air drying
vi) plasma polymerizing the polymer material of step v), such as under vacuum by shooting monomers of carboxylic acid in gas phase onto said polymer material to provide a hydrophilic plasma polymerised medium;
vii) immersing the hydrophilic plasma polymerised medium of step vi) in a solution comprising the catalytic agent to allow the catalytic agent to bind to the hydrophilic plasma polymerised medium to provide a first porous medium in the form of a flat surface and a second porous medium.

The present method is also directed to a method for producing first porous medium for carbon dioxide removal in the form of a pellet, said method comprising the steps of:
i) providing a solution comprising a material for the first porous medium as defined herein, said solution also comprising nanoparticles dispersed therein;
ii) dropwise releasing said solution of step i) into a liquid serving as a non-solvent of the material for the first porous medium to produce a first porous medium in the form of pellets;
wherein a catalytic agent is provided in said solution of step i) and/or provided to said pellets after their production in step ii) and optionally immobilising said catalytic agent to the outer surface of and the surface of the pores inside said first porous medium.

The present document is also directed to a first and/or second porous medium for carbon dioxide removal obtained or obtainable by a method for producing a first and/or second porous medium as described herein.

The present document is also directed to a porous medium for carbon dioxide removal from a carbon dioxide containing gas, comprising a first porous medium as defined herein, said porous medium optionally further comprising a second porous medium as defined herein.

The present document also discloses a system for carbon dioxide removal from a carbon dioxide containing gas, said system comprising a first porous medium as defined herein and a second porous medium as defined herein.

### BRIEF DESCRIPTION OF DRAWINGS

Fig. 1 shows an illustration of the general principles of the method and system of the present document wherein the first porous medium is in the form of a flat surface.
Fig. 2a to 2b show an alternative set-up of the system where the first porous medium is in the form of a pellet.
Fig. 3 shows a close-up of how the catalytic agent is positioned in a first porous medium in the form of a pellet. Fig. 3 also shows the dispersion a nanoparticle in the first porous medium membrane.
Fig. 4a-4e shows scanning electron microscopy images of a first porous medium in the form of a pellet showing it's entire external morphology, the surface porosity of pellets and the interconnectivity of the pores.
Fig. 5 shows pellet holding structure built for tests according to the concept shown in figure 2.
Fig. 6 shows test setup for capture reactor incorporating a first porous medium in the form of pellets or flat surface.
Fig 7a-7b shows results from stability test of pellets at elevated temperatures.

### DEFINITIONS

As used in this specification and the appended claims, the singular forms "a", "an" and "the" include plural referents unless the context clearly dictates otherwise.

The term "comprising" includes the term "consisting of" unless it is clear from the context that this is not intended.

### DETAILED DESCRIPTION

As mentioned above, present technologies for carbon dioxide (CO₂) removal from carbon dioxide containing gases, such as air, have drawbacks which limit their large scale use. The two major bottlenecks are lack of sufficiently large air-liquid contacts and the energy-intensive CO₂ desorption steps.

The present inventors have now surprisingly been able to mitigate the some of the problems associated with carbon dioxide removal from gases. The present document therefore provides an improved method and system for carbon dioxide removal from gas, such as for use in DAC and CCUS technologies.

The present document is thus directed to a method for carbon dioxide removal from a carbon dioxide containing gas. This method comprises the steps of:
i) contacting a carbon dioxide containing gas with a first porous medium, said first porous medium being hydrophilic and having a catalytic agent to catalyse the conversion of carbon dioxide into bicarbonate and hydrogen immobilized on its outer surface and inside its pores;
ii) allowing the bicarbonate formed in step i) to diffuse through the first porous medium whereby the catalytic agent catalyses the conversion of bicarbonate produced in step i) to carbon dioxide;
iii) allowing the carbon dioxide produced in step ii) to diffuse through a second porous medium, said second porous medium being hydrophobic,
wherein said first porous medium is wetted by a liquid, such as water, thus forming a liquid layer on said first porous medium and wherein said first porous medium and said second porous medium, respectively, have interconnected pores.

The method for carbon dioxide removal according to the present document may also comprise a step iv) of capturing (collecting) the carbon dioxide released from the second porous medium. The captured carbon dioxide may be stored or further processed.

The present document is also directed to a system for carbon dioxide removal from a carbon dioxide containing gas, said system comprising a first porous medium as defined herein and a second porous medium as defined herein.

Certain features of the method and system of the present document may be described in relation to either the method or the system. However, the same information applies to the system or method, respectively, even if this is not explicitly stated.

In the method and system of the present document, the carbon dioxide containing gas (herein also denoted feed gas) is passed over the surface of the first porous medium, where the carbon dioxide in the gas dissolves in the liquid in the liquid layer on the first porous medium. Due to carbon dioxide's higher solubility in liquid than other gases (such as CH₄, O₂ and N₂), the carbon dioxide will be absorbed by the water in a higher degree than other gases. The first porous medium has a catalytic agent immobilized on its (outer) surface and on the pores inside the first porous medium. Once the carbon dioxide is dissolved in the liquid, the catalytic agent on the surface of the first porous layer will catalyse the conversion of carbon dioxide to bicarbonate (HCO₃). The bicarbonate will diffuse inward in the first porous medium, where it will be converted back to carbon dioxide due to the lower concentration of carbon dioxide than bicarbonate inside the first porous medium. This reaction may be repeated several times in the first porous medium. Due to differences in the concentrations of CO₂ and bicarbonate in different parts of the first porous medium, a bicarbonate concentration gradient will be formed in the first porous medium which will drive the reaction of the catalytic agent to form carbon dioxide, which will be released on the other side of the first porous medium, i.e. the side opposite to where the feed gas is introduced to the first porous medium. The first porous medium is in close proximity to the second porous medium. The carbon dioxide released from the first porous medium thus enters the second porous medium and diffuse through this. The carbon dioxide is then released from the other side of the second porous medium, i.e. the side opposite to where the feed gas is introduced, where it can be collected for storage or further processing.

The present system comprising a first and second porous medium is different from conventional gas-liquid contactors, due to having gas both upstream and downstream of the media, i.e. on the outer side of both the first and the second porous medium. In conventional gas-liquid contactors there is a membrane at the middle and on one side there is a gas and on the other side there is a liquid. In the present system, the liquid is instead inside the porous media of the system, and both sides of the system are surrounded by gas. In microscale, the term medium contactor can also be applied taking the thin layer of water also into account. In this case, there is a combination of medium contactor embedded into a gas-gas medium. One advantage with this is that the resistance that could be caused by the diffusion in the bulk water layer is avoided. Such a system comprising the first and the second porous medium may herein also be denoted a "reactor" or a "porous reactor".

The catalytic agent may be a hydration and/or hydrolysis reaction rate promoter catalyst, a metal-organic framework (MOF), and/or a solid bis-iminoguanidine.

Hydration and Hydrolysis Reaction Rate Promoter Catalysts include enzyme-based catalysts from the carbonic anhydrase (CA) family of enzymes. Any carbonic anhydrase may be used according to the present document. Carbonic anhydrase catalyses the reaction of carbon dioxide to produce bicarbonate and proton.

Hydration and Hydrolysis Reaction Rate Promoter Catalysts also includes metal complexes and inorganic promoters. Examples of such include, but are not limited to, metal complexes with Zinc (Zn), Copper (Cu), Cadmium (Cd), Mercury (Hg), Cobalt (Co), Nickel (Ni), organic ligands like 1,4,7-triazacyclononane, 1,5,9-triazacyclododecane, 1,4,7,10-tetraazacyclododecane, 1,4,7,10-tetraazacyclotridecane, 2-benzimidazolylmethyl-6-sulfonic acid, Tris(2-benzimidazolylmethyl)amine, and inorganic promoters such as ZnCl₂, Zn(OH)₂, Zn(ClO₄)₂, Zn(NO₃)₂.

Examples of metal-organic frameworks (MOFs) include but are not limited to ZIF-8 (ZIF stands for Zeolitic imidazole framework) and MOF-74 (MOF stands for Metal organic framework).

Solid bis-iminoguanidines (BIGs) include, but are not limited to, 1,1'-(ethane-1,2-diyl)bis(3-(trifluoromethyl)guanidine) and 1,1'-(methanediyl)bis(3-(trifluoromethyl)guanidine).

The catalytic agent is immobilized on the surface of the first porous medium and on the surface of the pores inside the first porous medium. The immobilization can be effected in any suitable manner depending on the type of catalytic agent used. The immobilization may be physical or covalent. For example, when the catalytic agent is carbonic anhydrase this may be immobilized using glutaraldehyde cross-linking. Attachment of the catalytic agent to the first porous medium may also be achieved by a plasma polymerised surface modification as disclosed elsewhere herein. Carbonic anhydrase is preferably used as the catalytic agent according to the present document.

The carbon dioxide containing gas (herein also denoted feed gas) may be any gas containing carbon dioxide. For example, the carbon dioxide containing gas may be air or an emission gas with a carbon dioxide concentration from about 0.04% to about 100%, such as flue gas or raw biogas. The carbon dioxide containing gas may further contain a promoting gas, such as ammonia, for promoting the transport of said carbon dioxide into said liquid. The present method is particularly suitable to DAC. Baffles may be used in the method and system of the present document to promote the contact between the carbon dioxide in the carbon dioxide containing gas and the liquid over the first porous medium.

The first porous medium is hydrophilic. For example, the first porous medium may be made of an intrinsically hydrophilic polymer material or the first porous membrane may be formed on a hydrophobic surface by functionalising said hydrophobic surface so that it becomes hydrophilic as further disclosed elsewhere herein. For example, the first porous medium comprises or consists of thermoplastic polymer(s), preferably hydrophilic thermoplastic polymer(s), such as polyamide, polyimide, polyacrylonitrile, and/or polysulfone. The hydrophilic thermoplastic polymer may e.g. be polyimide, such as 4,4 bismaleimidodiphenylmethane. The first porous medium may further be functionalized by selective agents possessing amine groups, such as polyethyleneimine, polydopamine, or a combination thereof. The pores of the first porous medium are interconnected, thus forming a scaffold structure. The porosity if the first porous medium is typically from about 10% to about 90%, such as from about 20% to about 80%, such as from about 25% to about 60%, such as from about 30% to about 50%, such as from about 30% to about 40%.

The surface of the first medium and the surface of its pores may be functionalised with glutaraldehyde to allow the immobilization of carbonic anhydrase to it. The first porous medium may further comprise porous or non-porous nanoparticles. Such nanoparticles may serve as a host for carbonic anhydrase enzymes in contrast to polymers. Thus, the use of nanoparticles enables custom shaping and processing to provide a porous structure in the form of scaffold via a simple process. Such nanoparticles will also contribute to the hydrophilicity since the nanoparticles are highly hygroscopic. Such nanoparticles may have a mean diameter of e.g. from about 5 nm to about 200 µm. The nanoparticles may comprise or consist of a transition metal ion, such as zinc, cadmium, palladium, copper, a zeolite (such as molecular sieve grade zeolite 13X), a metal-organic framework, and/or silica. Such nanoparticles can be used to physically absorb carbonic anhydrase by physical bonding.

The first porous layer is wetted by a liquid. This liquid thus forms a liquid layer on the first porous medium but that also enters into the pores of the first porous medium to wet the inside of the first porous medium. This is one of the reasons that the first porous medium has to be hydrophilic, i.e. to allow the liquid to spread over the surface of the first porous layer and also to enter and spread over the surface of the pores inside the first porous layer. The liquid may for example be water, a buffer solution, The liquid may be provided to the first porous medium by spraying it over the first porous medium or by condensing said liquid on said first porous medium. Unlike conventional systems that utilize bulk water and/or solid-state media, the method and system of the present document uses a thin layer of a liquid on its surface. This reduces the resistance caused by diffusion in a bulk water or through solid media, resulting in a more efficient flux and diffusion of carbon dioxide to bring it into contact with the catalytic agent. In the present method and system, a confinement concept is utilized, water is continuously condensed onto the abundant surfaces available within the first porous medium with its fine pores interconnected resembling a scaffold structure. The liquid is preferably continuously condensed onto the surface of the first porous medium and also diffuses into the pores of the first porous medium. This strategy ensures continuous supply of water molecules onto the surface of the first porous medium, which is essential to prevent potential issues like water leakage from the pores, making the system more robust and leading to a more uninterrupted operation. The thickness of the liquid layer is typically from about 0.3 nm to about 1000 nm, such as from about 0.3 nm to about 50 nm, such as from about 3 nm to about 50 nm, such as 3 nm.

In prior art systems using carbonic anhydrase for carbon dioxide removal from a gas, the carbonic anhydrase has been attached to the walls of tiny channels drilled into a material. There are several disadvantages associated to this design including being complicated and posing serious challenges for up-scale. According to the present document, the water droplets condensed by capillary phenomena according to the prior art are replaced with a porous medium that has a liquid layer onto the entire surface. This leads to a decreased or eliminated leakage/loss of water in the pores. However, for this to work it is important to keep the surface of the first porous medium wet by covering it with a thin layer of liquid. The pores wherein the carbonic anhydrase is positioned need to be always wet since carbonic anhydrases only function when wet. Since the upstream is a gas containing CO₂, it contacts the porous structure and is destined to pass through the first porous medium. Over time, the gas carries water molecules with itself, and if no new water is provided to replenish the lost water, the first porous medium would be a dry structure with no functionality. Thus, it is important for the purposes of the present method to have a supply of water as a thin layer on the first porous medium.

The first porous medium is typically in the form of a flat surface or in the form of a pellet. When the first porous medium is in the form of a flat surface, the liquid layer typically has a thickness of less than about 50 nm, such as from about 0.3 nm to about 50 nm, preferably 0.3 nm. When the first porous medium is in the form of a pellet, the liquid layer forms around the pellet and is typically is from about 3 nm to about 1000 nm.

When the first porous medium is in the form of a flat surface, the pore size is typically in the range of about 10 nm to about 300 nm, such as from about 10 nm to about 250 nm, such as from about 100 to about 250 nm, such as about 200 nm. The thickness of a first porous medium in the form of a flat surface is typically from about 20 nm to about 500 µm, such as from about 5 µm to about 100 µm, such as from about 20 µm to about 100 µm, such as from about 20 µm to about 50 µm, such as from about 25 µm to about 55 µm.

A first porous medium as described herein in the form of a flat surface may be produced according to the below two exemplified methods, wherein the first porous medium (comprising the catalytic agent as defined elsewhere herein) is formed on the surface of the second porous medium.

In the first method for producing a first porous medium for carbon dioxide removal in the form of a flat surface, a polycarbonate or polyester membrane is track-etched. Thus, in the context of the present document, when the first porous medium is in the form of a flat surface, it may also be denoted a first porous membrane. The track-etching process is performed by irradiation of electrons or heavy ion source of xenon or gold ions to create clear straight tracks (electrons) in the test. The membrane may be placed in such a way that it sits on a suitable frame or holder to keep it flat and tensioned, thereby preventing any crinkling or movement during irradiation. A high-energy electron beam may be used, such as that from a linear accelerator or an electron gun, with energy of e.g. 1 MeV. To achieve consistent track formation, it is preferably made sure that the electron beam is uniformly distributed across the surface of the polymer film. A dosage of 10¹⁴ to 10¹⁶ electrons per square centimetres is applied. After that, a chemical etching process is performed to develop those damage tracks created by the electron irradiation into new visible and functional pores. To do so, irradiated membranes may be submerged in a heated basic solution, such as NaOH (e.g. 6 M),KOH or NH₄OH, although other basic solutions may be used as well. The temperature of the basic solution is typically from about 40 °C to about 65 °C, such as from about 50 °C to about 60 °C. The time for the submersion is typically about 1 to about 15 minutes, such as 5 to about 10 minutes. A too long submersion may damage the membrane. Thereafter, the membrane is immersed in a neutralizing agent (e.g. acetic acid) to stop etching. The membrane is then thoroughly rinsed with distilled or deionized water to remove all traces of the etching and neutralizing solution followed by drying, such as air drying. After this, track-etched pores with a diameter of ca 10-20 nm are created. The track-etched hydrophobic membrane is then plasma polymerized in vacuum condition by shooting monomers of carboxylic acid in gas phase resulting in polymerised thickness of around 10 nm carboxylic acid polymer on the surface and within the created pores. In this way, the first porous medium is formed on top of the hydrophobic membrane, which then will constitute the second porous medium. However, penetration of this layer into the pores are calculated to be within the range of 20 to 50 nm. The carboxylic acid monomers are specifically selected to bond with catalytic agents like carbonic anhydrase enzyme from the N terminal of the enzyme or to other catalytic agents disclosed herein. Plasma polymerization may therefore be used as a means for enabling binding of the catalytic agent to the first porous medium in the context of the present document. Thereafter the membrane is immersed in an aqueous solution comprising the catalytic agent. The immersion should be performed for long enough for the catalytic agent to bond to the hydrophilic plasma polymerised layer, such as for 2-20 hours, such as for 5-15 hours, such as for 8-15 hours, such as for about 12 hours.

In the second method, a polymeric hydrophobic membrane with a thickness as disclosed elsewhere herein for a first porous medium in the form of a flat surface is used as the starting material. This flat membrane is then track-etched with the same method as explained above for the first method for producing a first porous medium in the form of a flat surface. However, in the second method the tracks are not designed to build straight-through channels as in first method. Therefore, a smaller energy source, such as with less than 500 kev for electron or heavy ion (xenon or gold) radiation, is used to create tracks only entering around 10-20 nm in the hydrophobic membrane. After that, same chemical etching technique is performed as explained for the first method above. Vacuum plasma polymerisation is performed as in the first method, however, with more thickness to create around 10-35 nm thickness above the membrane surface using carboxylic acid monomer, thus forming a thicker first porous medium on the hydrophobic membrane. The polymerisation at this thickness will keep the channel shape of the underpin track-etched channels and will build upon them resulting in same channel form but with new polymerized material. Impregnation of the medium is then performed by immersing the flat structure within aqueous solution of a catalytic agent as exemplified elsewhere herein, such as CA, such as for 2-20 hours, such as for 5-15 hours, such as for 8-15 hours, such as for about 12 hours.

When the first porous medium is in the form of a flat surface of a polymer material, as is described in the two methods above, a hydrophobic material may be functionalised by plasma polymerisation. Such plasma polymerisation thus increases the hydrophilicity of the hydrophobic membrane, forming a hydrophilic first porous medium on top of the hydrophobic material. In such a structure, the hydrophobic material will act as the second porous medium. Thus, in this case, the first porous medium is formed on the surface of the second porous medium.

The present document is therefore also directed to a method for simultaneously producing a first porous medium the form of a flat surface and a second porous medium for carbon dioxide removal, said method comprising the steps of:
i) track-etching a polymer material, such as a polyester or polycarbonate membrane, to provide a polymer material with etch damages, e.g. using a high-energy electron beam;
ii) developing pores from the etch damages on the polymer material of step i) by chemical etching in a basic solution, such as a NaOH solution;
iii) neutralizing the basic solution on the etched polymer material of step ii), e.g. with an acid such as e.g. acetic acid, to stop the etching;
iv) optionally rinsing neutralised polymer material of step iii), such as with distilled or deionized water;
v) drying the polymer material of step iii) or iv), such as by air drying
vi) plasma polymerizing the polymer material of step v), such as under vacuum by shooting monomers of carboxylic acid in gas phase onto said polymer material to provide a hydrophilic plasma polymerised medium;
vii) immersing the hydrophilic plasma polymerised medium of step vi) in a solution comprising the catalytic agent to allow the catalytic agent to bind to the hydrophilic plasma polymerised medium to provide a first porous medium in the form of a flat surface and a second porous medium.

The main differences between the first and the second method for simultaneously producing a first porous medium in the form of a flat surface and a second porous medium for carbon dioxide removal are thus that in the first method a higher energy level is used in the track-etching step i) so that the channels formed go deeper into in the polymeric membrane. Further, in the second method, in step vii) the plasma polymerisation is performed so that more thickness, such as 10-35 nm, build up above the membrane surface (i.e. the first porous medium becomes thicker).

In the above method for simultaneously producing a first porous medium the form of a flat surface and a second porous medium for carbon dioxide removal, steps i)-v) are directed to forming pores in what will be the second porous medium, while steps vi) and vii) are directed to forming the first porous medium on top of said second porous medium. The present document is therefore also directed to a method for producing a first porous medium on the surface of a second porous medium by plasma polymerising the surface of the second porous medium, such as by performing steps vi) and vii) of the above method for simultaneously producing a first porous medium the form of a flat surface and a second porous medium. The present document is also directed to a method for producing a second porous medium by performing steps i) to v) of the above method for simultaneously producing a first porous medium the form of a flat surface and a second porous medium. It is also possible to form the first and the second porous media separately and then assemble the first porous medium on top of the second porous medium.

The present document is also directed to a first and a second porous medium for carbon dioxide removal obtained or obtainable by the method for simultaneously producing a first porous medium the form of a flat surface and a second porous medium.

When the first porous medium is in the form of pellets, the pore size is typically in the range of about 10 nm to about 500 µm, such as from about 10 nm to about 100 nm, such as from about 10 nm to about 1 µm. Such pellets typically have a mean diameter of from about 0.2 mm to about 10 mm, such as from about 1 mm to about 5 mm, such as from about 2 mm to about 7 mm, such as from about 3 mm to about 4 mm. The pellets preferably have a substantially spherical or cylindrical shape.

When the first porous medium is in the form of a pellet, such pellets may be placed in a column. The diameter of the column may e.g. be from about 0.5 mm to about 5 mm. Preferably, the column has the same diameter as the diameter of the pellet. This will minimize or ideally prevent the liquid to drain downwards in the column. It is possible to place more than one pellet in each column, such as from about 2 to about 200 pellets per column, such as from about 10 to about 200 pellets per column, such as about 10, about 100 or about 200 pellets per column. When more than one pellet per column is used, the pellets are typically stacked on top of each other. The column filled with the pellet may be placed in an array of one or more columns or in a non-array configuration wherein columns are randomly positioned. The columns may be created in a single piece called a bed. A catalytic agent may also be immobilized onto the walls of the columns. At side of the columns opposite to where the first porous medium is contacted with the carbon dioxide containing gas, the second porous is placed and the carbon dioxide formed in the first porous medium is passed through this second porous medium by diffusion as disclosed elsewhere herein. The second porous medium prevents leakage of the liquid through the column.

The present document is also directed to a method for producing a first porous medium for carbon dioxide removal in the form of a pellet (see elsewhere herein for a description of such pellets) using a non-solvent induced phase separation technique. Such a method may comprise the steps of:
i) providing a solution comprising a material for the first porous medium as defined elsewhere herein and optionally bearing nanoparticles as defined elsewhere herein;
ii) dropwise releasing said solution of step i) into a liquid serving as a non-solvent of material for the first porous medium to produce a first porous medium in the form of pellets;
wherein the catalytic agent is provided in the solution of step i) and/or is provided to said pellets after their production in step ii) and optionally immobilising said catalytic agent to the outer surface of and the surface of the pores inside said first porous medium. Nanoparticles as disclosed elsewhere herein may also be added to the solution in step i). However, the nanoparticles are not dissolved but only dispersed in the solution. Typical solvents for dissolving the material for the first porous medium to prepare the solution of step i) are NMP (N-Methyl-2-pyrrolidone), DMF (dimethylformamide), DMAc (dimethyleformamide). The concentration of material for the first porous medium in the solution is typically from 8 wt% to 30 wt%. The catalytic agent in such a method is preferably carbonic anhydrase although any of the catalytic agents described herein may be used. The carbonic anhydrase is for example immobilized by physical bonding or by glutaraldehyde cross-linking. The non-solvent is typically water or as mixture of water with an alcohol such as methanol, ethanol and/or isopropanol. Typically, the solution is released dropwise using an appropriate nozzle downward into the non-solvent from a distance from about 1cm to about 10 cm. the nascent pellets typically solidify upon contact with the non-solvent and then sink. The method may also comprise a further step iii) of rinsing the pellets with e.g. water to ensure that all of the solvent is removed from the pellets. The pellets maybe be dried as a final step, for example in a (vacuum) oven. Typically, the drying is carried out at moderate temperatures, typically not exceeding 50°C. For example, the process for preparing a first porous medium in the form of pellets may be performed as follows. If a nanoparticle is used, then first a small amount of the nanoparticle is, preferably gradually, added to the solvent under mixing. The mixing is preferably continued for at least 1 hour, such as for at least 5 hours and preferably for at least 10 hours, such as 5-15 hours. Sonication may be used to further ensure good dispersion. A small amount of polymer powder may also added at beginning of the process to cover adsorption sites and avoid agglomeration of the nanoparticles. The material for the first porous medium and the nanoparticles are then added gradually in several steps while stirring to create a homogenous mixture. Typically, the weight ratio of the material for the first porous medium and the nanoparticle is from about 50 wt% to about 75 wt% nanoparticle and from about 25 wt% to about 50% of material for the first porous medium. The catalytic agent in the form of a CA enzyme or other type of catalytic agent is also added into the solution under agitation. Thereafter, the solution is injected through a syringe pump to create discrete droplets of desired size (3-4 mm diameter) into a non-solvent phase (water). The phase inversion process starts at the entry of the droplets into the non-solvent phase. In fact, the exchange of solvent and non-solvent molecules at opposite directions happens when droplets enter water. The pellets will typically be kept in the non-solvent for several hours to ensure completion of the phase inversion process and removal of residual amount of solvent from the pellets. Care should be taken to prevent distortion of the nascent structure and enable formation of discrete porous cells inside the geometry. Pellets are preferably made in spherical shape with average diameter of 3-4 mm. The porosity is typically around 30-40%.

The present document is also directed to a first porous medium for carbon dioxide removal in the form of a pellet obtained or obtainable by the method for producing a first porous medium in the form of a pellet.

The function of the second porous medium is thus to prevent leakage of the liquid through the system. The second porous medium is thus hydrophobic. Any strongly hydrophobic material may be used for the second porous medium. For example, the second porous medium may be made of polypropylene, polyethylene, polyester, PVDF or PTFE. The second porous medium typically has a pore size of from about 10 nm to about 5 µm, such as from about 50 nm to about 3 µm, such from about 0.1 µm to 0.3 µm, as about 0.2 µm. When the first porous medium is in the form of a flat surface (see elsewhere herein), the second porous medium typically has a thickness in the range of 1 µm to 1 mm. When the first porous medium is in the form of pellets, the second porous medium typically has a thickness of from about 20 µm to about 200 µm, such as from about 20 µm to about 80 µm, such as from about 25 µm to about 55 µm. The thickness of the second porous medium is configured so that it prevents leakage of the liquid through the second porous medium. The pores of the second porous medium are interconnected, thus forming a scaffold structure. As disclosed elsewhere herein, the first porous medium may be formed by plasma polymerisation of the second porous medium so that the first porous medium forms a layer on top of the second porous medium. However, when the first porous medium is the form of a pellet, the second porous medium has to be separately provided. The second porous medium may in the context of the present document also be denoted a second porous membrane.

The present document is also directed to a porous medium for carbon dioxide removal from a carbon dioxide containing gas, comprising a first porous medium is as defined herein and wherein said porous medium optionally further comprises a second porous medium as defined herein.

The present document is also directed to a first and/or second porous medium for carbon dioxide removal obtained or obtainable by a method for producing a first and/or second porous medium as described herein.

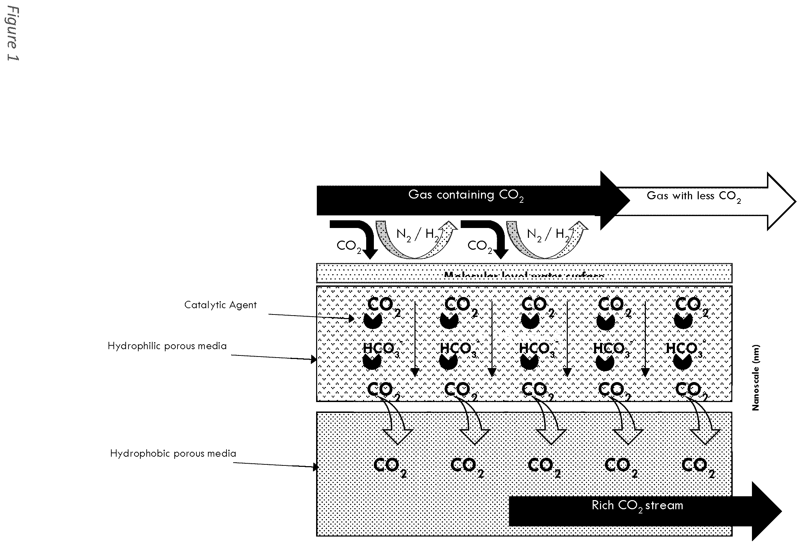

The present method and system will now be illustrated in further detail with reference to Figures 1 to 4. The set-ups illustrated in these figures are for illustrative purposes only and other set-ups of a first and second porous media allowing the method of the present document to be performed may also be used.

Figure 1 shows an illustration of the first and second porous media and the principle of the method of the present document. In this illustration the first porous medium is in the form of a flat surface, but the principles apply also for other shapes of the first porous medium herein. The feed gas containing carbon dioxide is introduced into the system, preferably under pressure to force the carbon dioxide and bicarbonate through the first and second porous media. When the feed gas comes into contact with the liquid on the surface of the first porous medium, the carbon dioxide dissolves in the liquid. The liquid layer on top of the first porous medium is very thin, preferably of molecular level thickness. The first porous medium has a catalytic agent immobilized on its outer surface and inside on the surface of the pores. The carbon dioxide from the feed gas is dissolved in the liquid and converted to bicarbonate by the action of the catalytic agent. The bicarbonate formed diffuses down through the first porous medium. This diffusion can be increased by introducing the feed gas at a pressure. Due to the equilibrium between formation of carbon dioxide and bicarbonate of the catalytic agent, further down in the first porous medium, where the concentration of carbon dioxide is lower, the reaction performed by the catalytic agent will be driven towards the formation of carbon dioxide. The carbon dioxide so formed will then diffuse into and through the second porous layer and released on the other side of it, i.e. the side opposite to where the feed gas is introduced. The carbon dioxide released from the second porous medium can e.g. be collected for storage or further processing. In the method and system of the present document, carbon dioxide from a feed gas thus comes into contact with a first side of a first porous medium and due to chemical reactions and formed equilibria, converted to bicarbonate and back to carbon dioxide and released on the other side of the first porous medium where a second porous medium is positioned in close proximity. The carbon dioxide from the first porous medium will then diffuse through a second porous medium and released on the other side of this for e.g. collection.

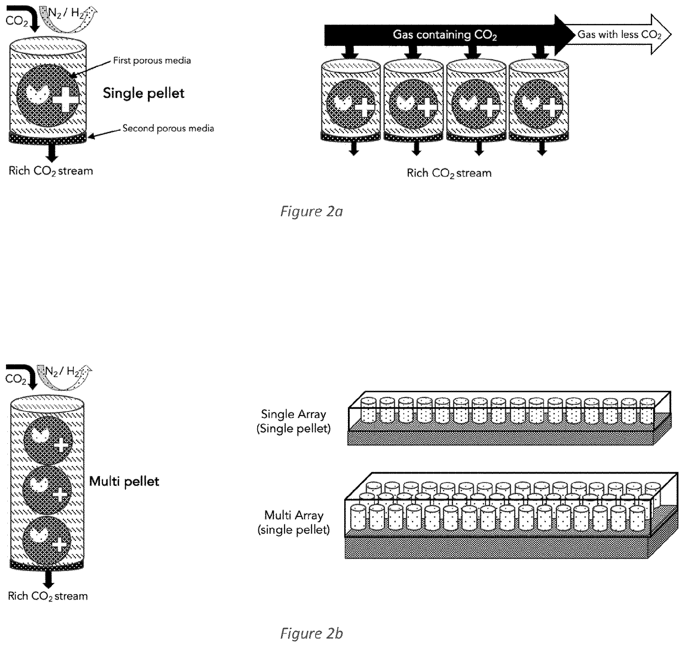

Figure 2 shows an illustration of an alternative set-up of the first and second porous media and the principle of the method of the present document. Here the first porous medium is not in the form of a flat surface (as it was illustrated in Fig. 1) but instead the first porous medium is in the form of pellets. The pellets are formed of the same materials as when the first porous medium is in the form of a flat surface and has the catalytic agent immobilized on its outer surface and inside on the surface of the pres. One or several pellets may be stacked together to perform the capture of the carbon dioxide from the feed gas, conversion to bicarbonate and back to carbon dioxide before release on a side opposite of where the feed gas is introduced to the pellet. Once the carbon dioxide is released from the pellet it diffuses into a second porous medium positioned on the other side of the pellet relative to where the feed gas is introduced to the pellet. Fig. 2a shows a system with a single pellet and Fig. 2b a stack of several pellets. Fig. 2c and 2d show exemplary arrangements of the first porous medium in the form of pellets and the second porous medium in column like arrangement in single or multi arrays.

A method for carbon removal from a carbon dioxide containing gas performed using a system as illustrated in Fig. 2 may comprise the steps of:
i) contacting said carbon dioxide containing gas with a bed having a number of columns, each column being filled at a first end with a first porous medium, said first porous medium being in the form of pellets and having a catalytic agent immobilised on the surface of its pores to catalyse the conversion of said carbon dioxide into bicarbonate and hydrogen, wherein said pellets are inserted in the columns with at least one pellet fitting the entire cross-section of the column and the depth of the column, wherein said bed is backed by a second porous medium at a second end of the column and covering the entire bottom of the column and wherein said columns are filled with a liquid;
ii) allowing the bicarbonate to diffuse through the first porous medium or pass over the surface of the first porous medium whereby said catalytic agent catalyses the conversion of bicarbonate produced in step i) to carbon dioxide;
iii) allowing the carbon dioxide produced in step ii) to diffuse through the liquid and be released at on the side of the pellet facing the second porous medium;
iv) passing the carbon dioxide of step iii) through the second porous medium covering the bottom of the column to release the carbon dioxide at the second end of the column.

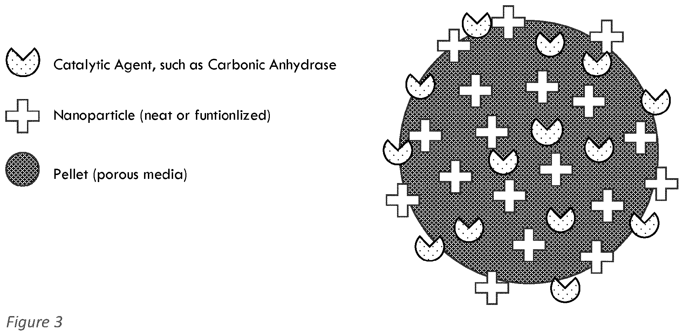

Fig. 3 shows a close-up of how the catalytic agent, here illustrated by carbonic anhydrase, is positioned in a first porous medium in the form of a pellet. Fig. 3 also shows the dispersion a nanoparticle in the first porous medium.

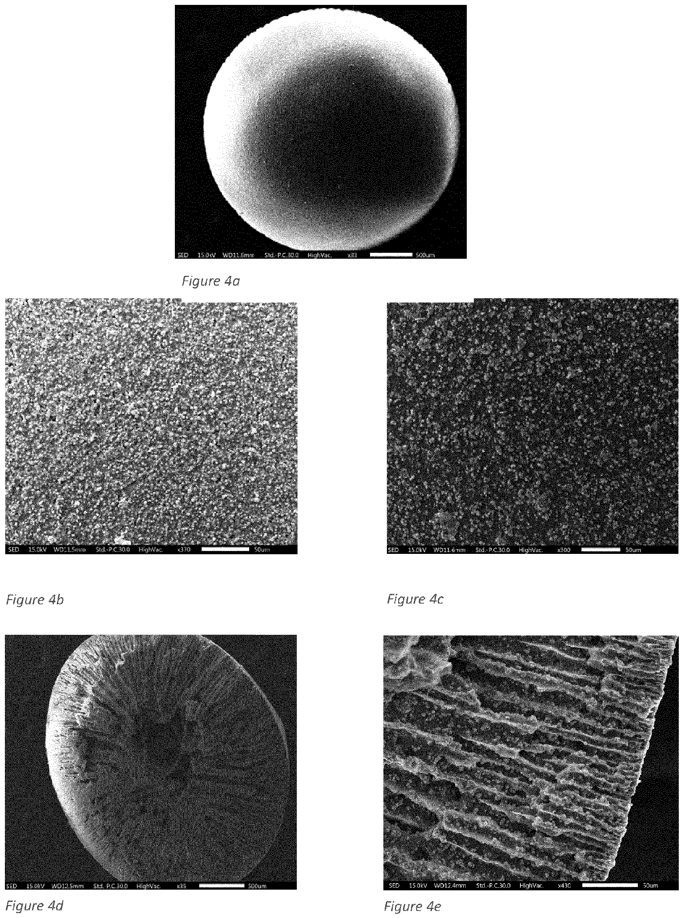

Fig. 4 shows a scanning electron microscopy image of a first porous medium in the form of a pellet showing it's entire external morphology, the surface porosity of pellets and the interconnectivity of the pores. The interconnectivity is the same when the first porous medium is in the form of a flat surface.

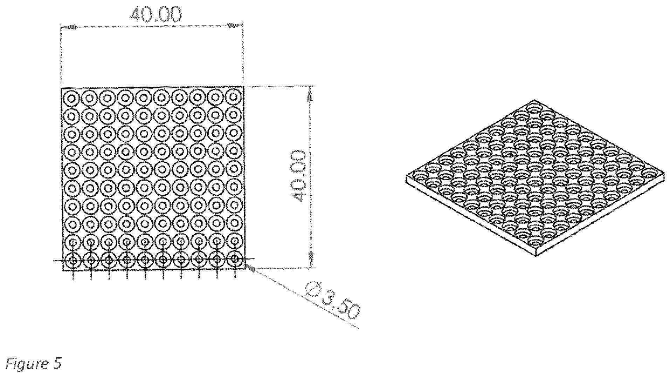

Fig. 5 shows a pellet holding structure built for tests according to the concept shown in Figure 2.

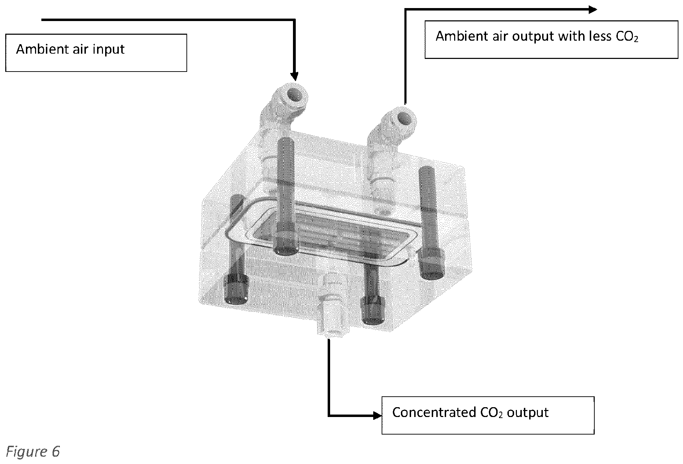

Fig. 6 shows test setup for capture reactor incorporating a first porous medium in the form of pellets or flat surface.

It is to be understood that while the invention has been described in conjunction with the detailed description thereof, the foregoing description is intended to illustrate and not limit the scope of the invention, which is defined by the scope of the appended claims. Other aspects, advantages, and modifications are within the scope of the following claims.

Unless expressly described to the contrary, each of the preferred features described herein can be used in combination with any and all of the other herein described preferred features.

Other features and advantages of the invention will be apparent from the following detailed description, drawings, and from the claims.

### EXPERIMENTAL SECTION

### System with a first medium in the form of pellets

### Fabrication of a first porous medium in the form of a pellet made of 4,4-bismaleimidodiphenylmethane, zeolite and comprising carbonic anhydrase

The porous reactors in the form of spherical geometry, i.e. pellets, to carry capture reactions at nano scale were created by the non-solvent induced phase separation technique disclosed elsewhere herein. The process involved using polyimide powder (e.g. 4,4 bismaleimidodiphenylmethane) and molecular sieve grade zeolite 13X and N-methyl-2-pyrrolidone as solvent. Initially small amount of zeolite is added gradually to the solvent with more than 10 hours mixing and sonication to ensure good dispersion. Next, small amount of polymer powder is also added at beginning of the process to cover adsorption sites and avoid agglomeration of zeolite particles. Polymer and zeolite in specific concentrations of 75% weight of zeolite and 25% polymer and 50% each (two models) are then added gradually in several steps while stirring to create homogenous mixture. Concentration ranges of polymer and zeolite are as disclosed elsewhere herein. The catalyst in the form of CA enzyme or other promotors (i.e. catalytic agents) as mentioned elsewhere herein is also added into the solution under agitation. Thereafter, solution incorporating the catalyst is injected through a syringe pump to create discrete droplets of desired size (3-4 mm diameter) into non solvent phase (water). The phase inversion process starts at the entry of the droplets into the non-solvent phase. In fact, the exchange of solvent and non-solvent molecules at opposite directions happens when droplets enter water. The pellets will remain in the non-solvent for several hours ensuring completion of phase inversion process and removal of residual amount of solvent from the pellets. Care was taken to prevent distortion of the nascent structure and enable formation of discrete porous cells inside the geometry. Pellets are made in spherical shape with average diameter of 3-4 mm. Porosity is around 30-40%.

### Second porous medium

The second porous medium used in pellet-based reactor of carbon capture is made of flat sheet hydrophobic polymeric membranes such as PTFE, PVDF, PE, PP with different porosities as explained elsewhere herein. For the sake of experimental setup, a PTFE membrane size of 40 mm by 40 mm with porosity of 0.2 micrometer, and 25-51 micrometer thickness, and bubble point of 19-26 in IPA is used. This hydrophobic membrane fits in the bottom of the structure as explained elsewhere herein.

Internal structure to accommodate catalysts and channels that serve as reaction mass transfer are shown in Figure 4. Together, it creates a nano reactor for CO₂ capture reactions that significantly increases the catalyst loading that otherwise could not be achieved in aqueous solutions.

For the experimental set-up, the pellets are placed inside a flat plastic structure with laser drilled holes as illustrated in Figure 5. The thickness of the flat plastic structure is just enough to accommodate two pellets in vertical position. The second porous media like a flat layer is situated at the bottom of this pellet holding structure.

The pellet containing structure with the second porous medium is then assembled inside a test cell as illustrated in Figure 6.

The test cell is made of acrylic transparent polymer as illustrated. Air flow is passing through the cell from top and separated CO₂ is extracted from the bottom.

### System with a first medium in the form of a flat surface

### Simultaneous fabrication of a first porous structure as a flat structure and a second porous medium

The flat structure reactors to carry nano scale reactions of carbon capture are made in two methods. In the first method, a polycarbonate or polyester membrane is track-etched. Membrane thickness range is as disclosed elsewhere herein for a first porous medium in the form of a flat surface (6 micrometre in the test). The track-etching process is performed by irritation of electrons or heavy ion source of xenon or gold ions to create clear straight tracks in the test. Membrane is placed in such a way they sit on a suitable frame or holder to keep them flat and tensioned, preventing any crinkling or movement during irradiation. A high-energy electron beam is used, such as that from a linear accelerator or an electron gun, with energy of 1 MeV. It is made sure that the electron beam is uniformly distributed across the surface of the polymer film to achieve consistent track formation. A dosage of 10¹⁴ to 10¹⁶ electrons per square centimetres is applied. After that, a chemical etching process is performed to develop those damage tracks created by the electron irradiation into new visible and functional pores. To do so, irradiated membranes are submerged in the heated NaOH solution 6 M (at 50 C) for 5 to 10 minutes. Thereafter, it is immersed in neutralizing agents (acetic acid) to stop etching. It is then thoroughly rinsed with distilled or deionized water to remove all traces of the etching and neutralizing solutions followed by air drying. After this, track-etched pores of 10-20 nm are created. Track-etched hydrophobic membrane is then plasma polymerized in vacuum condition by shooting monomers of carboxylic acid in gas phase resulting in polymerised thickness of around 10 nm carboxylic acid polymer on the surface and within the created pores. However, penetration of this layer into the pores are calculated to be within the range of 20 to 50 nm. This monomer is specifically selected to bond with bio catalyst like carbonic anhydrase enzyme from the N terminal of the enzyme or to other catalytic agents disclosed herein.

After fabrication of flat structure reactor, it is immersed in catalyst aqueous solution for 12 hours so that bio catalyst chemically bond to the hydrophilic plasma polymerised layer. The effect of this attachment will be evaluated in capture unit test further on.

Fabricated capture reactor is then placed inside the same test cell as illustrated before in pellet structure.

For the second method, a polymeric hydrophobic membrane (PTFE in the test) is used with approximate thickness of 25-52 micrometre and 0,2 micrometre porosity. This flat membrane is then track-etched with the same method as explained above, however, with the main difference that tracks are not designed to build straight through channels as in first method. Therefore, a smaller energy source with less than 500 kev for electron or heavy ion (xenon or gold) radiation is used to create tracks but around 10-20 nm within the hydrophobic membrane (PTFE in the test). After that, same chemical etching technique is performed as explained in previous method for flat structure. During last step, vacuum plasma polymerisation is done similar to previous method, however, with more thickness. The instrument is adjusted according to calculations to create around 10-35 nm thickness above the membrane surface using carboxylic acid monomer. The polymerisation at this thickness will keep the channel shape of the underpin track-etched channels and will build upon them resulting in same channel form but with new polymerized material. Impregnation is then applied by immersing the flat structure within aqueous solution of catalyst (CA) for 12 hours to chemically bond the catalyst onto and into the created channels.

### Evaluation of CO₂ capture reactions

To evaluate functionality of capture reactors in the form of pellets, first, solvent holding capacity was tested. After that, activity of catalysts that were impregnated onto/into pellets was evaluated. In order to assess CO₂ capture reactions, a precipitation assay was utilized in which the capture reaction within porous medium can be triggered using CO₂ saturated water and another agent such as calcium chloride that create precipitation within the reaction environment. The reason for this evaluation protocol is the potential to perform tens of tests without the need to build industrial capture unit. It is because same reactions as in direct CO₂ capture from gas phase in an industrial setup can be proved using precipitation protocol.

The pellets are in contact with CO₂ saturated water and calcium chloride with specified concentration (100 mM). After the reaction is finished (2 min), the pellets are filtered out and the precipitated CaCO₃ was weighed after centrifugation and drying for 24 h at 40 C to evaluate capture reactions.

The reactions are as follows:

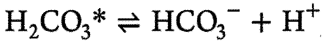

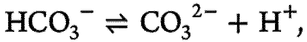

The more CO₂ capture activity through the pellets, the more carbonate ions produced and then following reaction results in more precipitation of calcium carbonate:

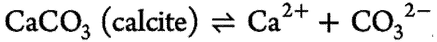

The perquisite for applicability of pellets to undertake capture reactions at nano scale is solvent holding capacity of them. To measure that, 20 of them were weighted and then immersed in water and agitated for 36 hours and then filtered out and weighted again and the difference in the weight is considered as water holding capacity. According to Table 1, the pellet shows water holding capacity at 165% of its original weight.

**Table 1. Holding capacity experiment results. Weights in gram.**

| Code | Weight 0 | Weight 1 | Difference |
|---|---|---|---|
| 20 pellets | 0.088 | 0.233 | 0.145 |

thereafter, 10 pellets were subjected to precipitation-based activity measurement as explained earlier. Results are demonstrated in Table 2. The first row in table below is reference experiment in which no pellet is added to the CO₂ saturated aqueous solution.

**Table 2. results of comparative capture in pellets. W refers to weight of water (in gram) before and after reaction (eliminated weight of water in pellets from last test). Three set of tests are performed on randomly selected pellets. D refers to weight difference. Average refers to increased weight as result of formed calcium carbonate. % implies increased weight (CO₂ capture reactions) in comparison with water only (no pellet).**

| Code | W0 (g) | W1 | D | W0 | W2 | D | W0 | W3 | D | Average | % from ref |
|---|---|---|---|---|---|---|---|---|---|---|---|
| Only water | 4.43 7 | 4.44 8 | 0.01 1 | 4.45 7 | 4.47 0 | 0.01 3 | 4.55 6 | 4.56 6 | 0.01 0 | 0.011 | |
| P ellet | 4.44 8 | 4.47 | 0.02 2 | 4.51 5 | 4.53 4 | 0.01 9 | 4.51 6 | 4.53 9 | 0.02 3 | 0.021 | 93.9 |

As illustrated above, actual precipitation reflects percentage of increased activity that happens only if capture reactions have been happened. The more weight of precipitated calcite, the more CO₂ capture activity within pellets.

### Stability of pellets at elevated temperatures

To simulate industrial CO₂ capture environments using the porous media of the present document (pellets), a series of thermal stability tests were defined and implemented. Like first evaluation of CO₂ capture reactions, thermal stability also follows the precipitation protocol for fast testing. However, a lab automation device for measuring turbidity is designed and applied. Turbidity refers to formation of calcium carbonate in the reaction environment that absorb the light transmittance. Therefore, if transmittance is 100%, there is no capture reaction happening in the environment. The optical instrument is capable of fast detecting (millisecond) any change in turbidity as result of precipitation reactions in an environment where our pellets and CO₂ saturated water are present. The tests were conducted at 40, 60, 80, and 95 °C and at 6 intervals (each 10 min, thus 10, 20, 30, 40, 50, and 60 min) with 3 repeats each one.

The pellet is exposed to the desired temperature for the defined times and after the exposure to temperature, certain amount of CO₂ saturated water was added to a tube containing pellets and then the assay was conducted using the reaction detection device. water (with CO₂ but no pellet) was used as Control - (control negative) and pellet without heat treatment was used as Control + (control positive). Data are collected each 5ms (milli second) for 250 data points.

**Table 3. design of experiment for thermostability analysis of impregnated porous mediums. In rows 2 and after it, the first number indicates the Temperature and the second one-time interval number. Each time interval number represents a multiply of 10 min. for example, 50:2 means the sample stayed at 50 °C for 20 min.**

| 5 | 4 | 3 | 2 | 1 | 0 | |
|---|---|---|---|---|---|---|
| **Control +** | **Control +** | **Control +** | **Control -** | **Control -** | **Control -** | **1** |
| **40 :2** | **40 :2** | **40 :2** | **40 :1** | **40 :1** | **40 :1** | **2** |
| **40 :4** | **40 :4** | **40 :4** | **40 :3** | **40 :3** | **40 :3** | **3** |
| **40 :6** | **40 :6** | **40 :6** | **40 :5** | **40 :5** | **40 :5** | **4** |
| **60 : 2** | **60 : 2** | **60 : 2** | **60 : 1** | **60 : 1** | **60 : 1** | **5** |
| **60 : 4** | **60 : 4** | **60 : 4** | **60 : 3** | **60 : 3** | **60 : 3** | **6** |
| **60 : 6** | **60 : 6** | **60 : 6** | **60 : 5** | **60 : 5** | **60 : 5** | **7** |
| **80 : 2** | **80 : 2** | **80 : 2** | **80 : 1** | **80 : 1** | **80 : 1** | **8** |
| **80 : 4** | **80 : 4** | **80 : 4** | **80 : 3** | **80 : 3** | **80 : 3** | **9** |
| **80 : 6** | **80 : 6** | **80 : 6** | **80 : 5** | **80 : 5** | **80 : 5** | **10** |
| **95 : 2** | **95 : 2** | **95 : 2** | **95 : 1** | **95 : 1** | **95 : 1** | **11** |
| **95 : 4** | **95 : 4** | **95 : 4** | **95 : 3** | **95 : 3** | **95 : 3** | **12** |
| **95 : 6** | **95 : 6** | **95 : 6** | **95 : 5** | **95 : 5** | **95 : 5** | **13** |

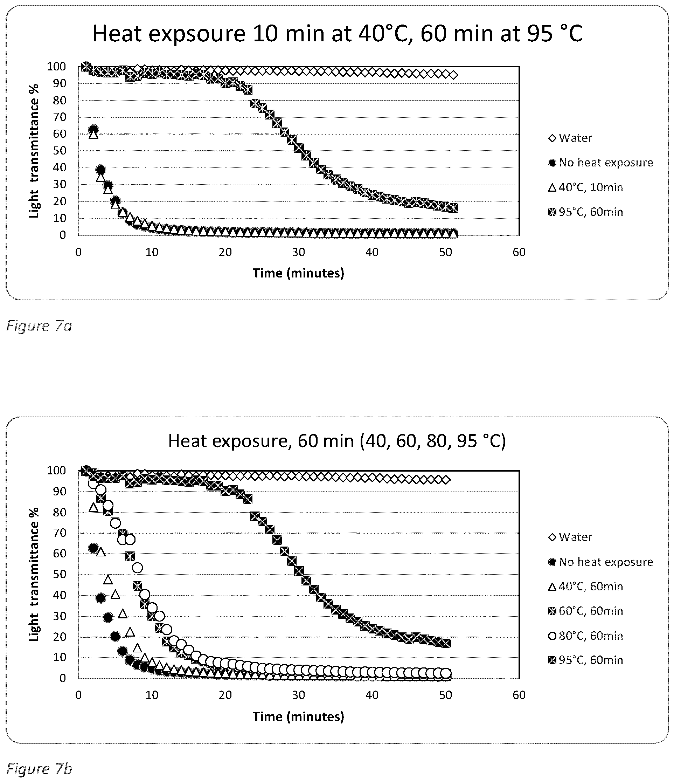

The effect that different temperatures and time intervals has on the CO₂ capture performance of the pellets is illustrated in graphs Fig.7a-7b. Fig. 7a illustrates the CO₂ capture performance. It depicts data for pure water (with CO2 and no pellet), control + (marked with 0 and orange color in graph), 40:1 and 90:6 test designs. It implies that heat treatment at 40 C for 10 min had no negative effect on the capture activity compared to the control + (pellet with no exposure to heat). On the other hand, the most extreme heat treatment (95 degrees for 60 min) had a negative effect on CO₂ capture in the form delayed activity, yet significantly better (higher performance) from the control - sample (no pellet). Vertical axis represents relative light transmittance. Thus, 100 implies 100% transmittance corresponding to no CO2 capture activity. If there is any activity, would be reflected in the partial or total reduction of light transmittance. The rate of transmittance decline reflects the kinetic of capture reactions. The faster decline implies a higher reaction kinetic because reaction products result in an increased turbidity and reduction in transmittance of light. Horizontal axis shows time, and each graph refers to specific temperature.

As another example, Fig. 7b shows results at highest test duration (60 minutes) at temperatures 40, 60, 80, 95 °C (all cases at 60 minutes exposure heat).

In general, thermal stability of pellets show promising results for their application in both direct and post combustion CO₂ capture in which elevated temperature is often unavoidable.

## Claims

1. A method for carbon dioxide removal from a carbon dioxide containing gas, said method comprising the steps of:
i) contacting said carbon dioxide containing gas with a first porous medium, said first porous medium being hydrophilic and having a catalytic agent to catalyse the conversion of carbon dioxide into bicarbonate and hydrogen immobilized on its outer surface and inside its pores;
ii) allowing the bicarbonate to diffuse through the first porous medium whereby said catalytic agent catalyses the conversion of bicarbonate produced in step i) to carbon dioxide;
iii) allowing the carbon dioxide produced in step ii) to diffuse through a second porous medium, said second porous medium being hydrophobic,
wherein said first porous medium is wetted by a liquid, such as water, thus forming a liquid layer on said first porous medium and wherein said first porous medium and said second porous medium, respectively, have interconnected pores.

2. The method of claim 1, wherein said catalytic agent is a hydration and/or hydrolysis reaction rate promoter catalyst, a metal-organic framework (MOF), an aqueous amino acid and/or a salt formulation thereof, a solid Bis-iminoguanidine and/or an enzyme, such as carbonic anhydrase.

3. The method of claim 1 or 2, wherein said first porous medium comprises or consists of thermoplastic polymer(s), preferably hydrophilic thermoplastic polymer(s), such as polyamide, polyimide, polyacrylonitrile, and/or polysulfone.

4. The method of any one of the preceding claims, wherein said first porous medium is in the form of a substantially flat surface or in the form of a spherical or cylindrical pellet, such as a pellet have a mean diameter of from about 0.2 mm to about 10 mm.

5. The method of any one of the claims 1-3, wherein said first porous medium in the form of pellets are placed in a column, preferably a column having a diameter of from about 0.5 mm to about 5 mm, preferably said diameter being substantially the same diameter as the diameter of the pellet.

6. The method of any one of the preceding claims, wherein said liquid layer has a thickness of from about 0.3 nm to about 1000 nm, such as from about 0.3 nm to about 50 nm, such as from about 3 nm to about 50 nm, such as about 3 nm.

7. The method of any one of the preceding claims, wherein said second porous medium is hydrophobic and comprises or consist of polypropylene, polyethylene, polyester, PVDF or PTFE.

8. A method for producing a first porous medium for carbon dioxide removal on the surface of a second porous medium by plasma polymerisation of the surface of a second porous medium, such as by plasma polymerisation of a second porous medium as defined in claim 7.

9. A method for simultaneously producing a first porous medium in the form of a flat surface and a second porous medium for carbon dioxide removal, such as a first porous medium as defined in any one of claims 1-4 and a second porous medium as defined in claim 7, said method comprising the steps of:
i) track-etching a polymer material, such as a polyester or polycarbonate membrane, to provide a polymer material with etch damages, e.g. using a high-energy electron beam;
ii) developing pores from the etch damages on the polymer material of step i) by chemical etching in a basic solution, such as a NaOH solution;
iii) neutralizing the basic solution on the etched polymer material of step ii), e.g. with an acid such as e.g. acetic acid, to stop the etching;
iv) optionally rinsing neutralised polymer material of step iii), such as with distilled or deionized water;
v) drying the polymer material of step iii) or iv), such as by air drying
vi) plasma polymerizing the polymer material of step v), such as under vacuum by shooting monomers of carboxylic acid in gas phase onto said polymer material to provide a hydrophilic plasma polymerised medium;
vii) immersing the hydrophilic plasma polymerised medium of step vi) in a solution comprising a catalytic agent to allow the catalytic agent to bind to the hydrophilic plasma polymerised medium to provide a first porous medium in the form of a flat surface and a second porous medium.

10. A method for producing first porous medium for carbon dioxide removal in the form of a pellet such as a pellet as defined in claim 5, said method comprising the steps of:
i) providing a solution comprising a material for the first porous medium, such as a material as defined in claim 3, said solution also comprising nanoparticles dispersed therein;
ii) dropwise releasing said solution of step i) into a liquid serving as a non-solvent of the material for the first porous medium to produce a first porous medium in the form of pellets;
wherein said catalytic agent is provided in said solution of step i) and/or provided to said pellets after their production in step ii) and optionally immobilising said catalytic agent to the outer surface of and the surface of the pores inside said first porous medium.

11. A first and/or second porous medium for carbon dioxide removal obtained or obtainable by the method according to any one of claims 8-10.

12. A porous medium for carbon dioxide removal from a carbon dioxide containing gas, said porous medium comprising a first porous medium is as defined in any one of claims 1-5, said porous medium optionally further comprising a second porous medium as defined in claim 7.

13. A system for carbon dioxide removal from a carbon dioxide containing gas, said system comprising a first porous medium as defined in any one of claims 1-5 and a second porous medium as defined in any one of claim 7.
